(19) Europäisches Patentamt
European Patent Office
Office européen des brevets

(11) EP 2 193 591 B1

(12) EUROPEAN PATENT SPECIFICATION

(45) Date of publication and mention
of the grant of the patent:
29.10.2014 Bulletin 2014/44

(51) Int Cl.:
*H02K 1/06* (2006.01)

(21) Application number: 08803852.6

(22) Date of filing: 08.09.2008

(86) International application number:
PCT/EP2008/061884

(87) International publication number:
WO 2009/030779 (12.03.2009 Gazette 2009/11)

(54) **MAGNETIC CORE AND USE OF MAGNETIC CORE FOR ELECTRICAL MACHINES**

MAGNETKERN UND VERWENDUNG DES MAGNETKERNS FÜR ELEKTROMASCHINEN

NOYAU MAGNÉTIQUE ET UTILISATION DU NOYAU MAGNÉTIQUE POUR DES MACHINES
ÉLECTRIQUES

(84) Designated Contracting States:
AT BE BG CH CY CZ DE DK EE ES FI FR GB GR
HR HU IE IS IT LI LT LU LV MC MT NL NO PL PT
RO SE SI SK TR

(30) Priority: 07.09.2007 DE 102007042619

(43) Date of publication of application:
09.06.2010 Bulletin 2010/23

(73) Proprietor: ThyssenKrupp Electrical Steel GmbH
45881 Gelsenkirchen (DE)

(72) Inventors:
• BRUDNY, Jean, François
F-59830 Wannehain (FR)

• CASSORET, Bertrand
F-62161 Maroeuil (FR)
• LEMAÎTRE, Régis
F-62400 Béthune (FR)
• VINCENT, Jean-Noël
F-59130 Lambersart (FR)

(74) Representative: Cohausz & Florack
Patent- und Rechtsanwälte
Partnerschaftsgesellschaft
Bleichstraße 14
40211 Düsseldorf (DE)

(56) References cited:
EP-A- 1 503 486      EP-A2- 0 493 945
FR-A1- 2 428 077      JP-A- 8 223 831
JP-A- 2004 084 034

## Description

The present invention relates to a magnetic core comprising a stack of electrical steel sheets with a known preferential direction of permeability. Furthermore a building technique for a magnetic core comprising grain oriented sheets in order to increase the energy efficiency of alternating current electrical machines whose magnetic core is submitted to a variable magnetic field is disclosed.

A wide variety of electrical machines often comprise magnetic cores (cited as "MC" hereinafter) substantially made of electrical steel. Naturally the properties of the electrical steel substantially making up the magnetic core influence various properties of the electrical machine. In particular for magnetic cores grain oriented electrical steel may be used.

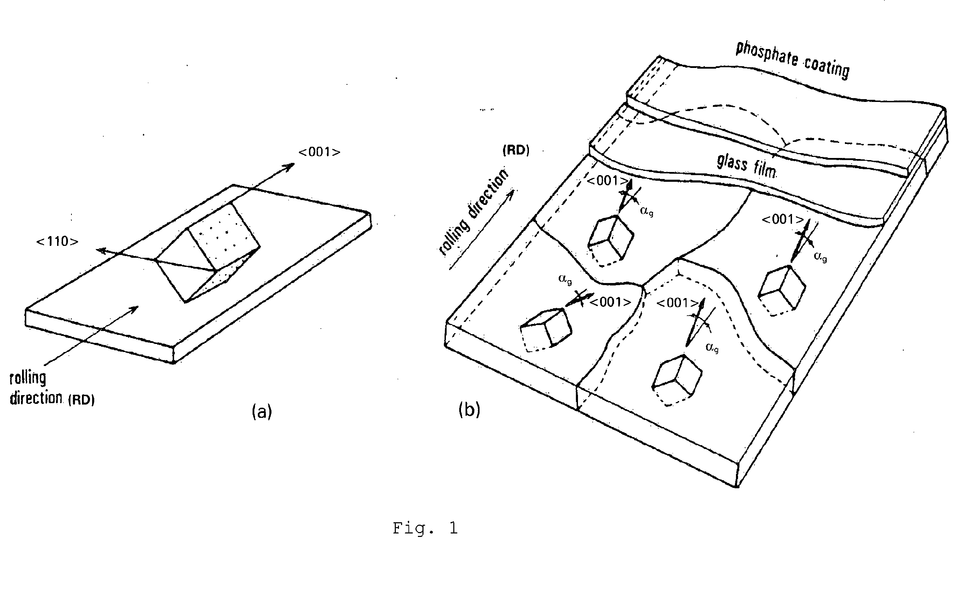

The microstructure of the Grain Oriented electrical steel (cited as "GO" hereinafter) shown in Figure 1 (a), points out that the grains are aligned with their <001> crystallographic direction parallel to the Rolling Direction (cited as "RD" hereinafter) and that the transverse direction is parallel to a <110> crystallographic direction of the grain.

An angle $\alpha_1$ may be defined as the difference between the RD and the orientation <001> of each grain of the sheet. This angle is schematically represented in the Figure 1 (b). The closer it is to naught the better the magnetic performances will be if the flux flows along the RD.

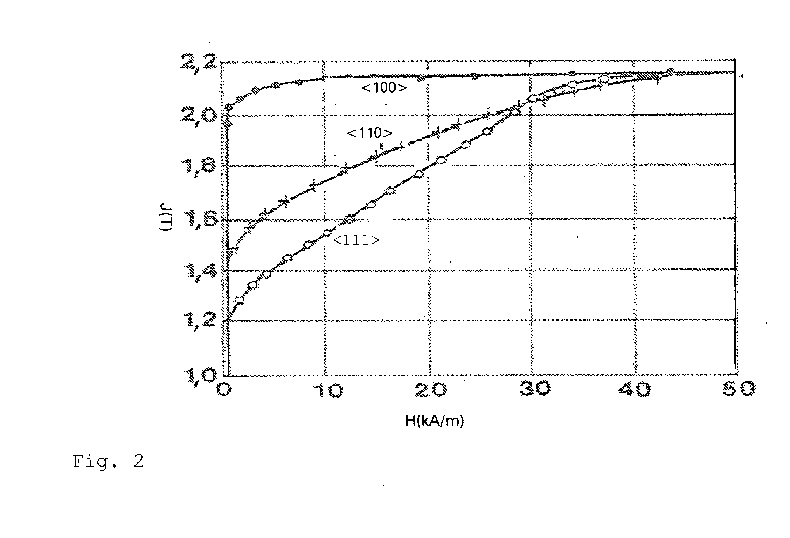

Figure 2 represents the single crystal magnetic behavior of steel containing 3% silicon. The magnetic flux density J in Tesla (T) is plotted versus the magnetic field strength H in kilo ampere per meter for three orientations of the crystal represented by their Miller indices: <001> the easy axis, <111> the hardest axis and <110> an in-between axis as similarly shown in P. Brissonneau "Magnétisme et matériaux magnétiques".

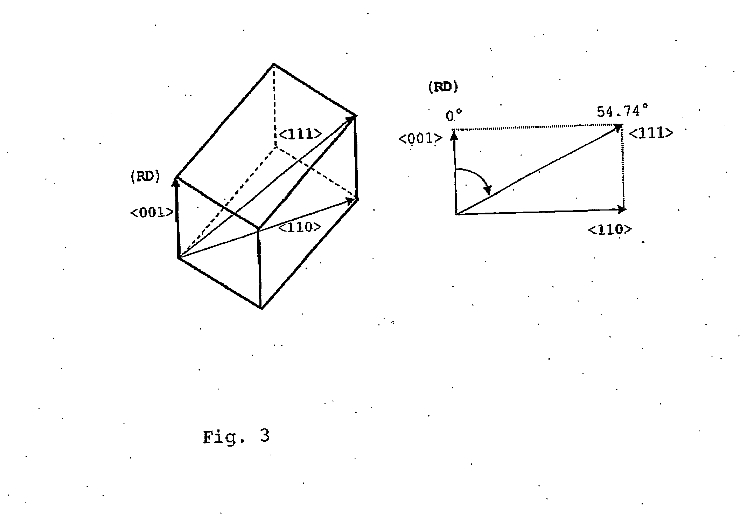

If GO sheets and strips industrially manufactured behave as single crystals, one can find the easy axis close to the RD. The hard axis corresponding to the <111> crystallographic axis, which forms an angle of 54.74° with the <001> axis for cubic crystals (see figure 3), should therefore be found close to an angle of 54.74° from the RD.

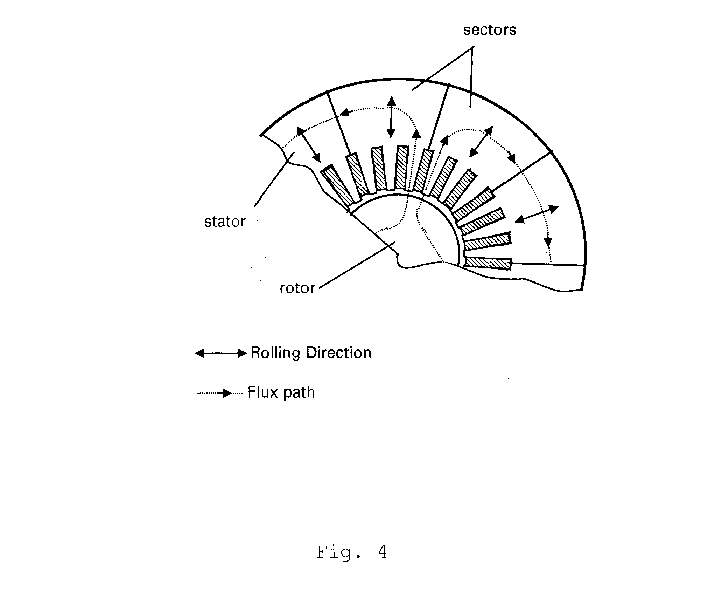

GO grade has already been used for high power rotating electrical machines (diameter of stator more than 1m) by using cut sheets in different sectors. The figure 4 presents a part of the MC of such a machine using this design. One can take the chance to make these segments with GO such that the RD is practically aligned to the tooth axis. It can be observed that the flux in the teeth, which are submitted to the highest magnetic flux density, works with an angle $\alpha_2$, which angle is defined as the angle between the direction of the magnetic flux density and the RD corresponding to the direction given by the Miller index <001> of the grains of the teeth, close to 0°. This is different in the segment core where $\alpha_2$ is mainly equal to 90° and with other areas, with variable $\alpha_2$ corresponding to a change in flux orientation.

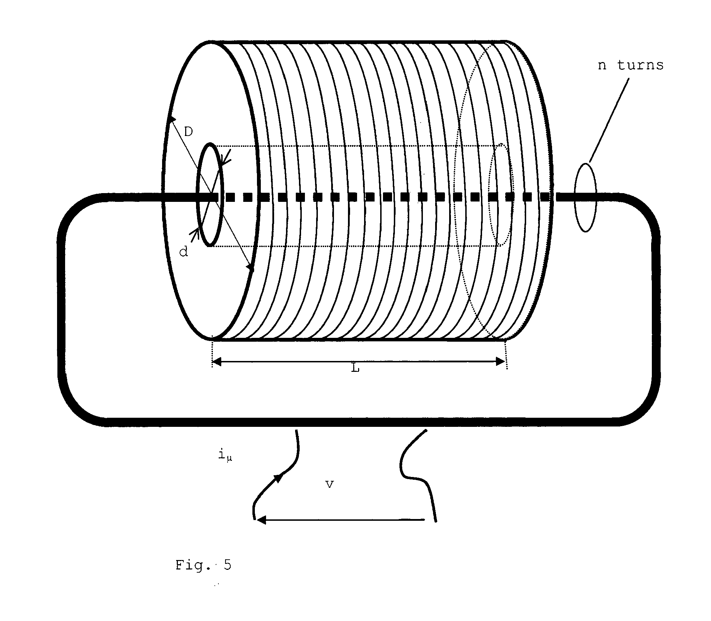

In order to present the problem of this assembly, a torus shaped MC made with GO is considered. This torus, presented in figure 5, is energized by a coil set as shown in this figure. This MC is subjected to a unidirectional magnetic field whose peculiarity is that $\alpha$ continually varies. Unidirectional refers in this context to a field whose orientation, meaning either clockwise or counterclockwise, does not change in the MC.

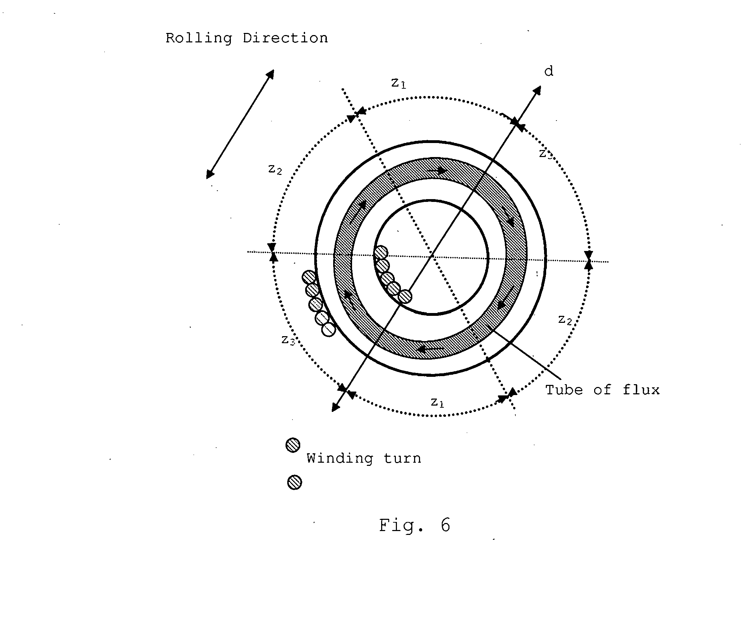

In first approximation it is possible, taking into account the RD, to characterize the magnetic core in 6 areas which can be associated in pairs of two as shown in figure 6. In $z_2$ areas, the angle $\alpha_2$, again defined as the angle between the direction of the magnetic flux density and the RD corresponding to the direction given by the Miller index <001> of the grains, may be considered as naught. It may be considered to be equal to 60° for the areas $z_1$ and $z_3$ (according to the spatial periodicity $\alpha_2=120°$ is similar to $\alpha_2=60°$). As the different areas cover the same angle, energetic performance downgrading will be significant simply due to $\alpha_2$ which has to take all the possible values all along the flux path.

With increased energy dissipation due to losses, the energy efficiency of the machine as a whole will be diminished.

So one can notice that in case of unidirectional field and with a torus type MC many problems arise.

It is the same trend for rotating magnetizing fields of alternating current rotating electrical machines as previously evoked.

The Japanese Patent Application JP 08223831 A discloses a magnetic core according to the preamble of claim 1 comprising a stack of electrical steel sheets wherein the alignment of successive single sheets and / or groups of sheets differs by a predetermined shift angle. The stack of electrical steel sheets of the magnetic core is made of bidirectional steel.

The European Patent Application EP 1 503 486 A1 discloses a magnetic core comprising a stack of electrical steel sheets wherein the alignment of successive single sheets and / or groups of sheets differs by a predetermined shift angle. In this case, the stack of electrical steel sheets of the magnetic core is made of non oriented steel.

The problem to be solved is to design a magnetic core with better energetic performance. Furthermore an advantageous use of such a magnetic core shall be given.

The problem is solved according to the invention with a described magnetic core with the features of claim 1 and with a described use of a magnetic core comprising the features of claim 6.

In accordance with the invention a magnetic core is disclosed comprising a stack of electrical steel sheets with a known preferential direction of permeability. In the stack the preferential direction of permeability of successive single sheets differs by a predetermined shift angle. In addition or alternatively, the preferential direction of permeability of successive groups of sheets in the stack differs by a predetermined shift angle.

Further, in accordance with the invention a magnetic core comprising a stack of electrical steel sheets with a known preferential direction of permeability as a stator and additionally or alternatively as a rotor of an electrical rotating machine is described, wherein in the stack the preferential direction of permeability of successive single sheets differs by a predetermined shift angle and in addition or alternatively, the preferential direction of permeability of successive groups of sheets differs by a predetermined shift angle.

In addition an assembling method of a magnetic core for an electrical rotating machine is described comprising stacking electrical steel sheets with a known preferential direction of permeability. The preferential direction of permeability of successive single sheets in the stack differs by a predetermined shift angle. In addition or alternatively, the preferential direction of permeability of successive groups of sheets in the stack differs by a predetermined shift angle.

The steel sheets may be stacked in any direction. The stacked steel sheets may or may not be overlapping. A preferential direction of permeability may be the direction in which the permeability is at a relative maximum. The preferential direction of permeability may be at a spatial angle relative to the rolling direction of the steel sheet. Each group of sheets may comprise the same number of single sheets. Each group of sheets may also comprise a varying number of single shifts.

The difference in the preferential direction of permeability by a predetermined shift angle between successive single sheets and in addition or alternatively between successive groups of sheets allows the flux to "jump" from sheet to sheet according to the principle of least magnetic reluctance to achieve a higher magnetization along the flux path.

In accordance with the invention the shift angle is between 50° and 70°, in particular between 55° and 65°, especially close to 60°. This has the technical effect of having a relative minimum of relative permeability of a single sheet or of a group of sheets next to a relative maximum of relative permeability of a successive single sheet or group of sheets, thus allowing the flux to continuously flow through regions with high relative permeability.

Advantageous embodiments of this core are given in the following.

According to an exemplary embodiment of the invention, the stack of electrical steel sheets of the magnetic core is made of grain oriented electrical steel sheets. This has the technical effect of readily allowing the manufacture of electrical steel sheets having a preferential direction of permeability.

In an exemplary embodiment of the invention, the shift angle is the same for each pair of successive single sheets or successive group of sheets. Having the shift angle be the same for each pair of successive single sheets or successive group of sheets has the technical effect of providing a symmetric distribution of the magnetization and thus of local efficiency along the path of the magnetic flux.

According to an exemplary embodiment of the invention, the preferential direction of permeability in the electrical steel sheets is essentially parallel to the rolling direction of the respective steel sheet. This has the technical effect of allowing the easy determination of the preferential direction of permeability based on the parameters of the manufacturing process.

According to an exemplary embodiment of the invention, the individual steel sheets have a thickness in the range from 500 micrometers to 230 micrometers. This has the technical effect of reducing energy dissipation due to eddy currents.

In an exemplary embodiment of the invention, the single sheets have a magnetic flux density $B_{800A/m}$ greater than 1.85 Tesla when exposed to a magnetic field strength of 800 Ampere per meter. This has the technical effect of ensuring a high saturation flux density and thus reducing dissipation losses in the magnetic core.

According to an exemplary embodiment of the invention, the use of a magnetic core is described wherein the angle between two successive teeth of the stator is an integer divisor of the shift angle. This has the technical effect of ensuring optimal magnetic flux for each tooth and thus improved energy efficiency of the stator as a whole.

In an exemplary embodiment of the invention, the use of a magnetic core for the construction of a transformer is described. This has the technical effect of improving the efficiency of the transformer.

According to an exemplary embodiment of the invention an assembling method of a magnetic core for an electrical rotating machine is described comprising marking the rolling direction of the electrical steel sheets, stamping or laser cutting the electrical steel sheets. The predetermined shift angle between the preferential direction of permeability of successive single sheets or of successive groups of sheets is close to the angle between the rolling direction and the direction corresponding to the <111> Miller index of the crystallographic axis, which angle is at an angle of 54.74 degrees from the <001> axis for cubic crystals. This has the technical effect of enabling an easier orientation of the electrical steel sheets during assembly of the magnetic core.

Fig. 1 is an illustration of the microstructure of an exemplary GO electrical steel sheet;

Fig. 2 is an exemplary illustration of the variation of the magnetic flux density versus magnetic field strength of a single crystal of steel containing 3% silicon;

Fig. 3 is an illustration of the relationship between angles and crystallographic axes of an exemplary cubic crystal;

Fig. 4    is an illustration of an exemplary rotating electrical machine using cut sheets in different sectors according to the prior art;

Fig. 5    is an illustration of a torus shaped MC with GO and energized by a coil according to the prior art;

Fig. 6    is an illustration of a cross section of an MC with GO and magnetic flux according to the prior art;

Fig. 7    is an illustration of Epstein strips cut from GO at various angles from RD;

Fig. 8    is an illustration of the magnetic flux density versus the imposed magnetic field strength for the Epstein strips;

Fig. 9    is an illustration of the variation of the saturation magnetic flux density with the angle between the direction of the magnetic field and the rolling direction;

Fig. 10   is an illustration of the variation of the maximum relative permeability with the angle between the direction of the magnetic field and the rolling direction;

Fig. 11   is an illustration of the variation of the iron power dissipation losses with the magnetic flux density for various angles between the direction of the magnetic field and the rolling direction;

Fig. 12   is an illustration of an exemplary not shifted stack of GO sheets corresponding to assembly GO 00° according to the prior art;

Fig. 13   is an illustration of a stack of GO sheets shifted with an angle of 60° between two successive GO sheets according to an exemplary embodiment of the invention;

Fig. 14   is an illustration of the variation of the magnetizing current components with the applied voltage for an exemplary not shifted stack of GO sheets and a shifted stack of GO sheets according to an exemplary embodiment of the invention;

Fig. 15   is an illustration of the variation of the magnetic flux density with the applied voltage for an exemplary not shifted stack of GO sheets and a shifted stack of GO sheets according to an exemplary embodiment of the invention;

Fig. 16   is an illustration of the variation of iron power dissipation losses with the applied voltage for an exemplary not shifted stack of GO sheets and a shifted stack of GO sheets according to an exemplary embodiment of the invention;

Fig. 17   is an illustration of the variation of the magnetizing current components with the applied voltage for exemplary stacks of NO sheets, for an exemplary not shifted stack of GO sheets and a shifted stack of GO sheets according to an exemplary embodiment of the invention;

Fig. 18   is an illustration of the variation of iron power dissipation losses with the applied voltage for exemplary stacks of NO sheets, for an exemplary not shifted stack of GO sheets and a shifted stack of GO sheets according to an exemplary embodiment of the invention;

Fig. 19   is an illustration of the magnetizing currents for exemplary stacks of NO sheets, for an exemplary not shifted stack of GO sheets and a shifted stack of GO sheets according to an exemplary embodiment of the invention;

Fig. 20   is an illustration of iron power dissipation losses for exemplary stacks of NO sheets, for an exemplary not shifted stack of GO sheets and a shifted stack of GO sheets according to an exemplary embodiment of the invention;

Fig. 21   is an illustration of the magnetizing current time phasors for an exemplary not shifted stack of GO sheets and a shifted stack of GO sheets according to an exemplary embodiment of the invention.

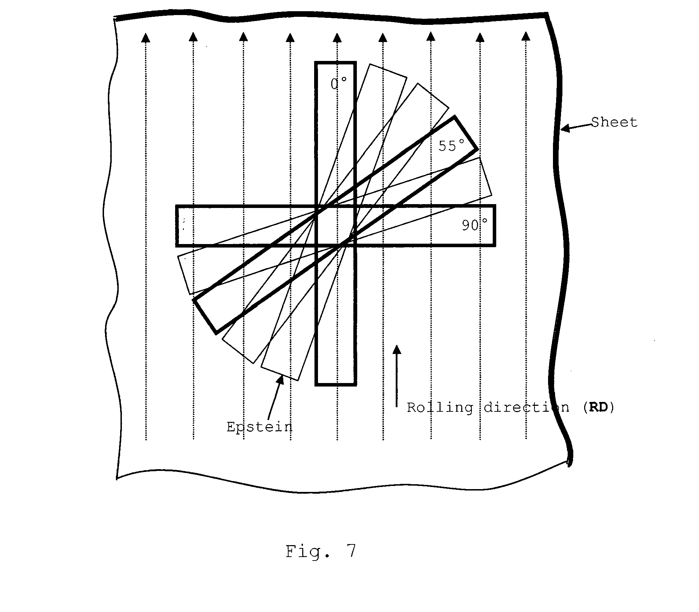

In order to check if the real GO sheets and strips are representative of the single crystal magnetic behavior, experiments have been performed on Epstein strips cut at various angles $\alpha_3$ from RD as shown in figure 7. The GO material grade used is the Powercore C 140-35, it has been tested at 50 Hz in an Epstein frame. The operating process consists of a demagnetization of the MC made with these strips followed by a sequence of loops produced by a varying magnetic field strength range going up to the 800 A / m maximum field. Let us note that in the Epstein strips, the flux mainly flows along $\alpha_3$.

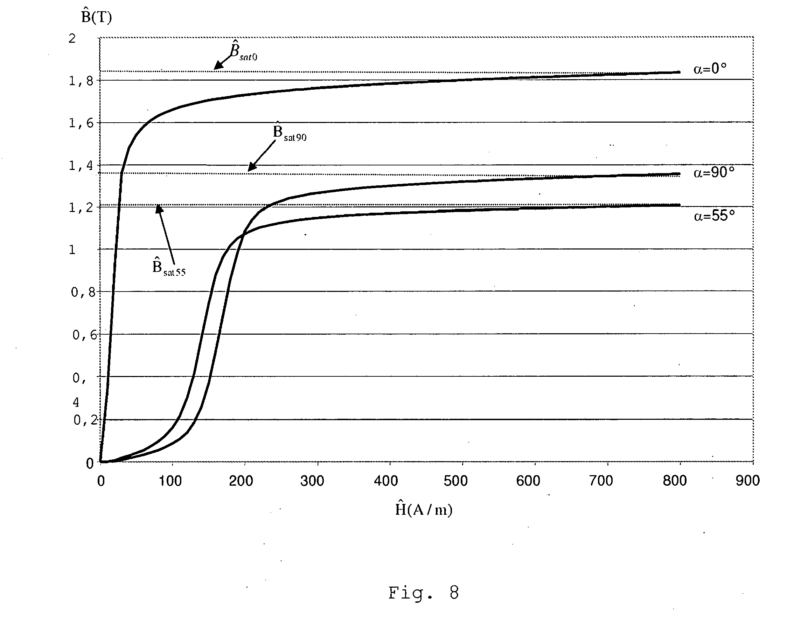

In the figure 8 the maximum magnetic flux density value B in Tesla is plotted versus the imposed maximum magnetic field strength H. The B and H values are deduced from each B(H) loop.

Results for the angles $\alpha_3$ between the direction of the magnetic field and the rolling direction of 0°, 55° and 90° show similar shapes as the ones presented in figure 2:

- $\alpha_3 = 0°$ is similar to the <001> crystallographic direction,
- $\alpha_3 = 90°$ is similar to the <110> crystallographic direction,
- $\alpha_3 = 55°$ is similar to the <111> crystallographic direction.

So the magneto crystalline anisotropy of the GO material is similar to the single crystal of steel containing 3% silicon.

For $\alpha_3 = 0°$, corresponding to the direction of the magnetic field and the RD being parallel, these performances result from:

- a high saturation magnetic flux density level $B_{sat}$,
- a very high maximum relative permeability $\mu_{rmax}$.

The relative permeability $\mu_r$ is deduced from the maximum magnetic flux density $B_{max}$ (Hmax) plot and $\mu_{rmax}$ is the highest value of the plot relative permeability $\mu_r$ versus maximum magnetic field strength $H_{max}$.

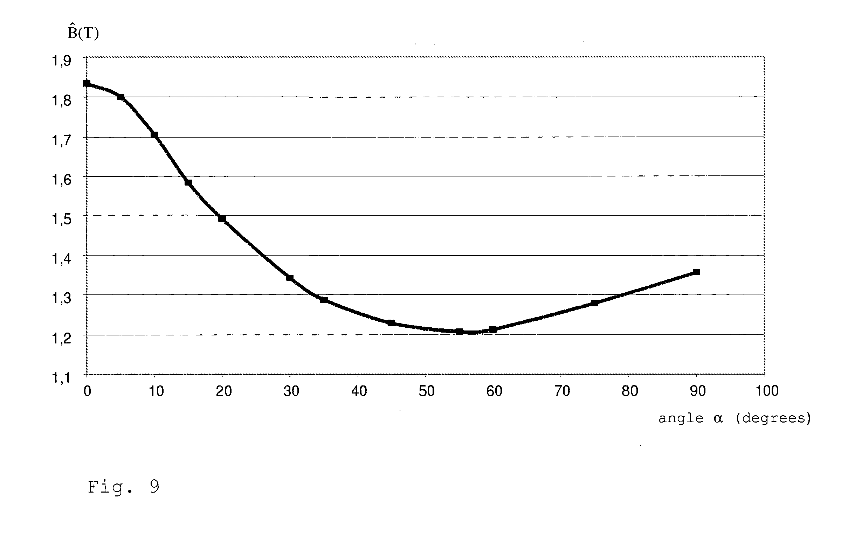

All these performances are downgraded as $\alpha_3$ deviates from zero as it can be seen in figures 9 to 11 which present:

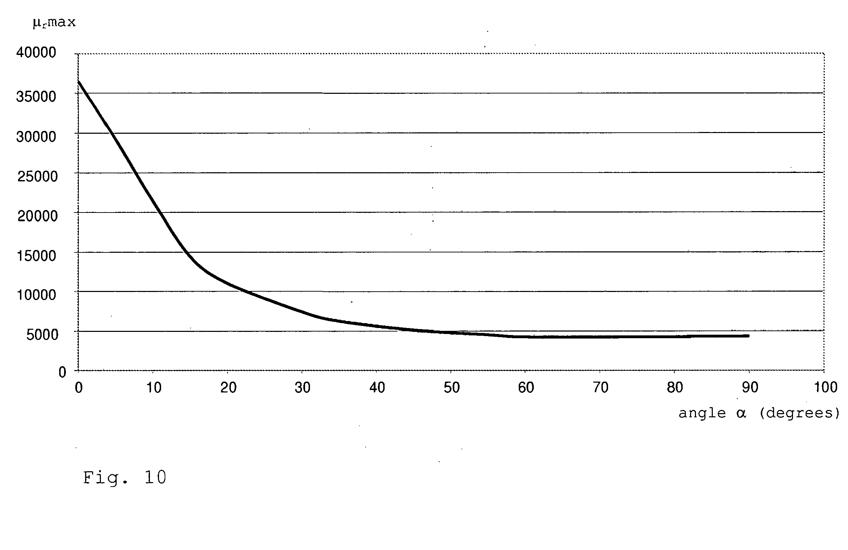

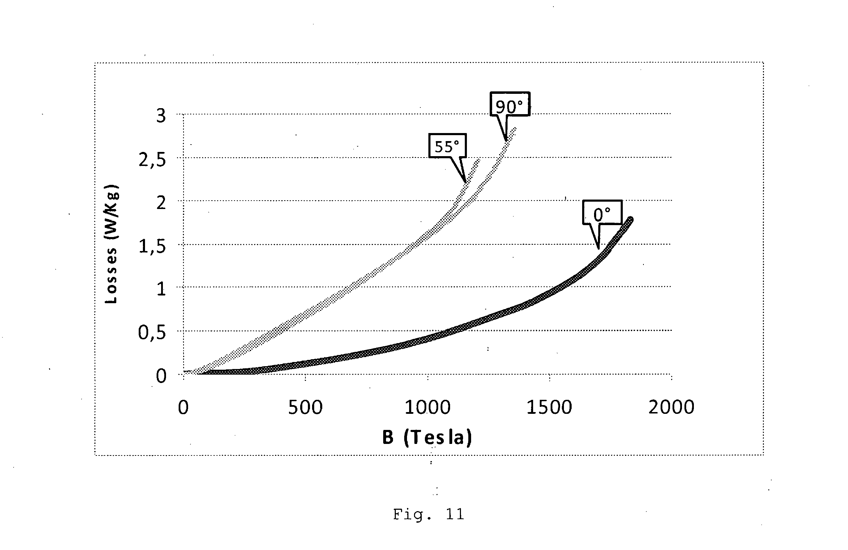

- the variations of the saturation magnetic flux density $B_{sat}(T)$ with $\alpha_3$ (figure 9)
- the variations of the maximum relative permeability $\mu_{rmax}$ with $\alpha_3$ (figure 10)
- the variations of the iron power dissipation losses (W/kg) with magnetic flux density B(T) for various $\alpha_3$ (figure 11).

The reduced iron power dissipation losses obtained for $\alpha_3 = 0$ result from a very thin hysteresis loop.

The most critical case corresponds to $\alpha_3 = 55°$. This angle fits rather well with 54.74° the angle between the hard axis <111>, corresponding to the direction of least relative permeability, and the <001> axis in a single crystal, corresponding to the RD. Therefore one can use these performances to build a MC made of a stack of GO sheets taking into account the magneto crystalline anisotropy.

A torus is constituted of circular sheets piled up to create a MC dedicated to receive a coil made of n=5 turns (wire section equal to 1.5 mm$^2$). These sheets, electrically insulated, are 10 cm in diameter D and are drilled parallel to their axis 1.6 cm in diameter d.

The MC is clamped between two jaws at each end. Its length L is equal to 6.7 cm for each tested set. Therefore one can assume that the stress compressing the assembly is the same for each prototype.

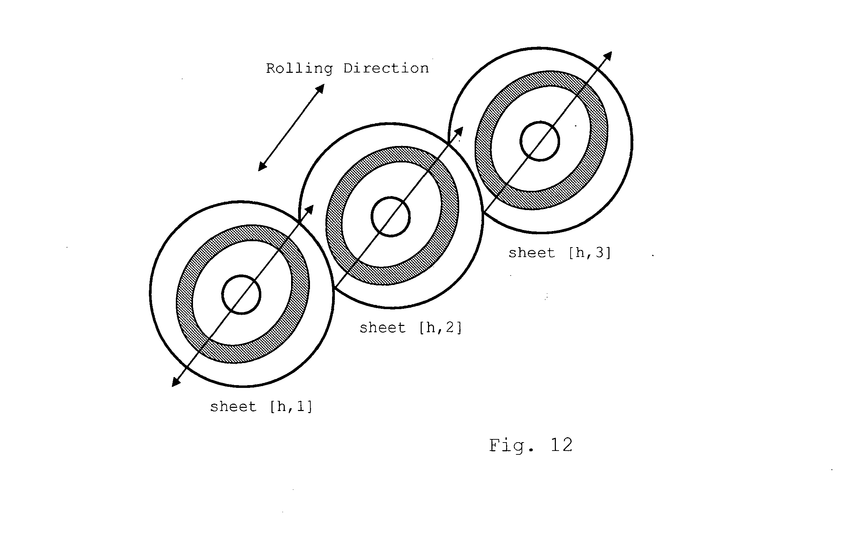

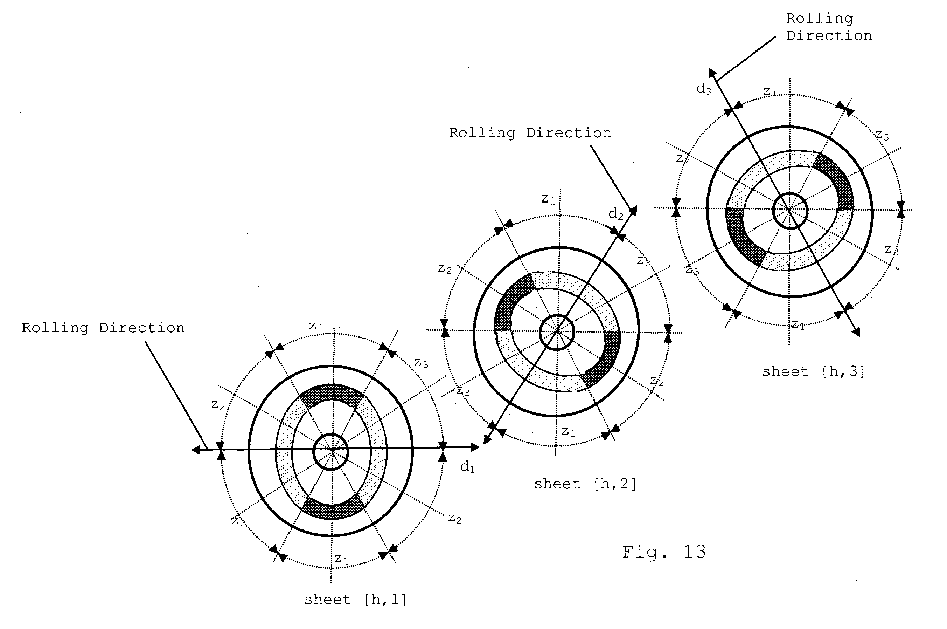

Two different assembling cases have been tested and compared: a not shifted stack of GO sheets (Assembly GO 00°) as shown in figure 12, and a stack of GO sheets (see fig. 13) shifted with an angle equal to 60° between two successive sheets (Assembly GO 60°).

Experiments were performed using the prototype presented in figure 5. Each MC was built up with 200 0.35 mm thick GO sheets stamped in the Powercore C 140-35 electrical steel grade. The aim is to compare GO 60° and GO 00° assembly performances:

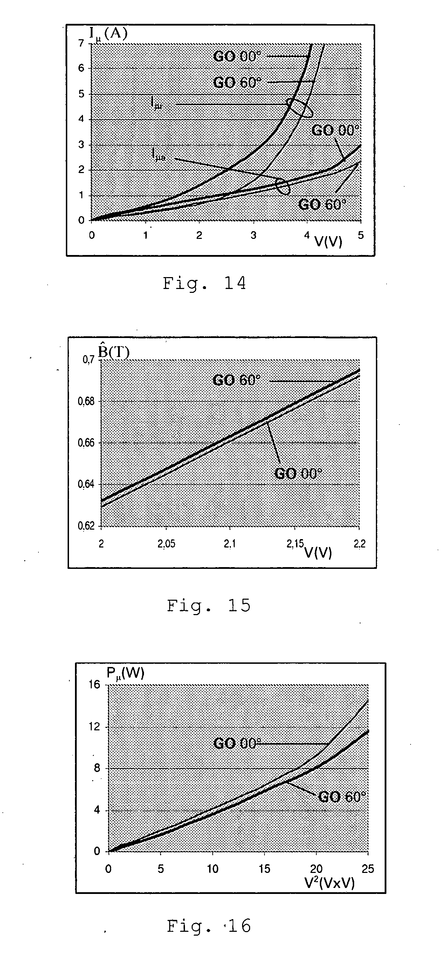

- The curves in figure 14 give the variations of the active $I_{\mu a}$ and reactive $I_{\mu r}$ magnetizing current $I_\mu$ components with the applied voltage V for both described configurations. It can be noted that the assembly GO 60° needs lower current components, especially concerning $I_{\mu r}$, for given V and consequently, approximately, for given magnetic flux density B.

- The deduced variations of magnetic flux density B with V for both configurations, when V varies from 0 to 5 V, show that the characteristics are practically merged and that they evolve linearly from 0 T for V = 0 V to 1.556 T for V=5V for the assembly GO 00° (1.572T for the assembly GO 60°). The figure 15 which presents a zoom of magnetic flux density B(V) in the vicinity of V=2V, highlights that the assembly GO 60° exhibits for given V, a higher magnetic flux density B although the reactive magnetizing current component is lower (this peculiarity is mainly due to the coil resistive voltage drop which is lower for the assembly GO 60°). The calculation of the effective relative permeability $\mu_r$ for V=4.5V gives: $\mu_r = 2680$ for the assembly GO 00°, $\mu_r = 18810$ for the assembly GO 60°, which is an interesting difference. Referring back to the figure 10 we can see that 18810 is close to the mean relative permeability value 20000 obtained from $\alpha_3 = 0°$ and $\alpha_3 = 55°$, respectively.

- The figure 16 presents the variations of iron power dissipation losses $P_\mu$ with V$^2$. One can notice that the assembly GO 60° leads to weaker iron losses. One can also see that these losses evolve in an appreciably linear way as a function of V$^2$ until V$^2$=20VV (V=4.5V). This value V=4.5 V is consistent with $I_{\mu a}$ variations presented in figure 14 (faster growth of this current component above V=4.5V). It can thus be concluded that the saturation starts to affect notably the MC behavior for V > 4.5 V (B > 1.42 T). One can notice that this magnetic flux density saturation level corresponds approximately to the mean value of the quantities which can be deduced from the curves B(H) presented in figure 8 respectively for $\alpha_3$ = 0° and 55°.

These elementary considerations show well that the magnetic flux goes across or jumps, in a manner of speaking, from one sheet to the next following the path of the least magnetic reluctance. This peculiarity leads to, for a configuration GO 60° compared to the aligned configuration (GO 00°), less iron power dissipation losses and lower magnetizing current under the same supply voltage, which indirectly leads to less copper losses in the coil resistance.

In these conditions, it also seems that the peak magnetic flux density for a given V, is higher for the GO 60° than for the GO 00°. From an economic point of view, labor costs are higher because of the care needed to assemble the GO 60° shifted sheets. However the gains on the power dissipation losses (iron + copper) for given B render this technology profitable when taking into consideration the increase of the energy efficiency in electrical devices. Having shown good performances of GO 60° configuration compared to aligned configuration GO 00°, a comparison will be made using non oriented sheets (cited as "NO" hereinafter).

The GO are those quoted of the previous paragraph. Concerning the NO, there are 2 grades:

- TO 400-50AP (iron power dissipation loss 4 W/kg at 50 Hz and 1.5 T, thickness: 0.5 mm)
- TO H-M 600-50 (iron power dissipation loss 6 W/kg at 50 Hz and 1.5 T, thickness: 0.5 mm)

The NO will be superposed without any special precaution (loose assembling). The devices assembled in that way will be marked with references NO 400-50 and NO 600-50.

Let us point out that, in order to have the same volume of iron, the MC using NO will be made of 140 sheets.

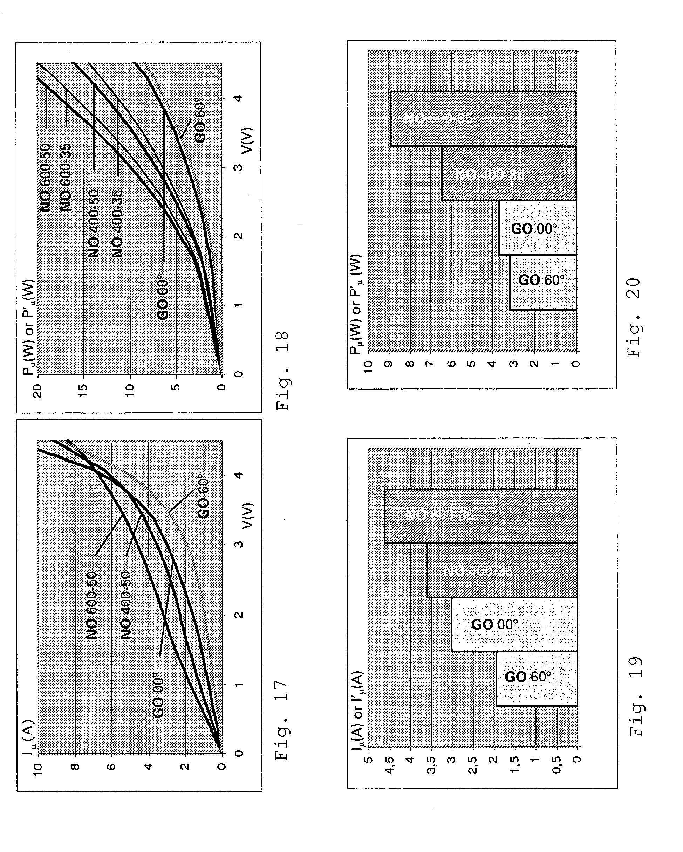

Curves of figure 17 give the variations of current $i_\mu$ with V. Those of figure 18 present the variations of the iron power dissipation losses $P_\mu$ with V. These iron power dissipation losses include eddy current losses and hysteresis losses. It is rather difficult to draw a conclusion from these curves which show that 0.5 mm thick NO present more losses than 0.35 mm thick GO because it is known that the eddy current losses are a function of the square of the sheet thickness. Therefore eddy current losses are twice as low for 0.35 mm thick GO as for 0.5 mm thick NO. It seems a priori logical that curves relative to 0.35 mm thickness are lower than those relative to 0.5 mm.

In order to make a suitable comparison, it is advisable to switch theoretically from curves of 0.5 mm NO to the power dissipation losses in sheets of the same metallurgical constitution but of 0.35 mm thickness keeping the same iron volume. To make this switch one only has to refer to literature where it is mentioned that for the NO, at 50 Hz, eddy current losses represent only 1/8th of total iron losses. So it is simple to correct the curves obtained from NO with 0.5 mm thickness. If we consider a less favorable case (eddy current losses equal to 1/5th of total losses) we obtain corrected curves giving the variations of the power dissipation losses $P'_\mu$ with V identified NO 400-35 and NO 600-35 (see figure 18). Note that $P'_\mu$ is derived from $P_\mu$ by using the relation:

$$P'_\mu = P_\mu \left[ \frac{4}{5} + \frac{1}{5} \left( \frac{0.35}{0.50} \right)^2 \right]$$

Considering the remark made about the contribution of eddy current losses, the resulting curves are very close to the original curves.

It is noted that, for sheets of the same thickness, the GO present iron power dissipation losses much lower than NO (ratio close to 2 for the NO 400-35), whatever the assembling technique.

The iron power dissipation losses for GO 60° are not much lower than for GO 00° at the scale of the iron power dissipation losses of NO.

[0055] In fact, the advantage brought by the shift appears much more clearly on the magnetizing currents (curves in figure 17).

Diagrams in figures 19 and 20 given for V =3 V (B approximately 1 T, which implies that some parts of MC are submitted to magnetic flux densities much higher, notably for GO) illustrate this property (the currents $I'_\mu$ for the configurations NO 400-35 and NO 600-35 are deduced from the $I_\mu$ values taking the corrections on the iron power dissipation losses into account, the corrected values are very close to the initial ones). When MC reaches important saturation levels, this property of the currents disappears (cf. figure 17), keeping nevertheless very satisfactory performances on iron power dissipation losses.

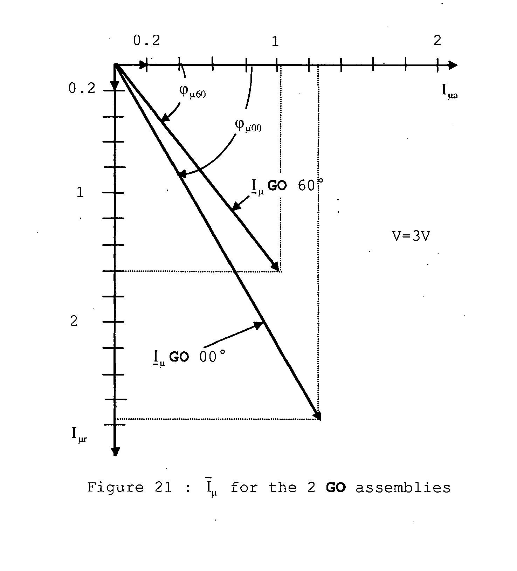

Diagram in figure 21 presents, for V = 3 V, the magnetizing currents time phasors $\underline{I}_\mu$ for the configurations GO 00° and GO 60°. One notes that for GO 60°, not only does this current decrease, but also the power factor $\cos(\varphi_\mu)$ is improved by a reduction of the angle $\varphi_\mu$ between $\underline{I}_\mu$ and its active component $I_{\mu a}$. This further results in a reduction of the voltage drop in the grid induced by the magnetizing current.

In conclusion it is interesting to use GO to make MC because the iron losses and the magnetizing currents are significantly decreased.

A GO 60° assembly leads to lower iron power dissipation losses compared to the aligned assembly GO 00° by significantly reducing the magnetizing current. This reduction acts mainly on the component $I_{\mu r}$, which can be translated as: $\mu_r$ GO 60° » $\mu_r$ GO 00°. This notable reduction of $I_{\mu r}$ leads to a significant improvement of the power factor even in the case of high magnetic flux densities in the MC. The double effect of current reduction and power factor increase has a very beneficial effect on grid supply voltage drops, which represents a significant economical stake. It is advisable to notice that the proposed assembly, which does not need specific cuttings, does not require an excessive additional cost due to labor; therefore it is perfectly appropriate for the making of low power alternating current rotating electrical machines which cover a very large application domain.

Let us note that since this assembly GO 60° leads to interesting performances for the torus-type device, other alignments (all kind of shifting angles different from zero) are also worthwhile for certain electrical devices, notably when the intention is to respond to a given effect.

Abbreviations:

GO: Grain Oriented
RD: Rolling Direction
MC: Magnetic Circuit
NO: Non Grain Oriented

**Claims**

1. Magnetic core comprising a stack of electrical steel sheets with a known preferential direction of permeability, wherein in the stack the preferential direction of permeability of successive single sheets and / or groups of sheets differs by a predetermined shift angle, wherein the stack of electrical steel sheets of the magnetic core is made of grain oriented electrical steel sheets, **characterized in that** the shift angle is between 50° and 70°.

2. Magnetic core according to claim 1 **characterized in that** the shift angle is the same for each pair of successive single sheets or successive group of sheets.

3. Magnetic core according to any of the claims 1 or 2 **characterized in that** the preferential direction of permeability of the electrical steel sheets is essentially parallel to the rolling direction of the respective steel sheet.

4. Magnetic core according to any of the claims 1 to 3 **characterized in that** the individual steel sheets have a thickness in the range from 500 $\mu$m to 230 $\mu$m.

5. Magnetic core according to any of the claims 1 to 4 **characterized in that** the single sheets have a magnetic flux density $B_{800A/m}$ greater than 1.85 Tesla when exposed to a magnetic field strength H of 800 Ampere per meter.

6. Use of a magnetic core according to any of the claims 1 to 5 as a stator and / or rotor of an electrical rotating machine.

7. Use of a magnetic core according to claim 6, **characterized in that** the angle between two successive teeth of the stator is an integer divisor of the shift angle.

**Patentansprüche**

1. Magnetkern, der einen Stapel von Elektrostahlblechen mit einer bekannten Vorzugsrichtung der Permeabilität umfasst, wobei sich in dem Stapel die Vorzugsrichtung der Permeabilität von aufeinanderfolgenden einzelnen Blechen und/oder Gruppen von Blechen durch einen vorbestimmten Verschiebungswinkel unterscheidet, wobei der Stapel von Elektrostahlblechen des Magnetkerns aus kornorientierten Elektrostahlblechen besteht, **dadurch gekennzeichnet, dass** der Verschiebungswinkel zwischen 50° und 70° ist.

2. Magnetkern nach Anspruch 1, **dadurch gekennzeichnet, dass** der Verschiebungswinkel für jedes Paar aufeinanderfolgender Einzelbleche oder aufeinanderfolgender Gruppen von Blechen der gleiche ist.

3. Magnetkern nach einem der Ansprüche 1 oder 2, **dadurch gekennzeichnet, dass** die Vorzugsrichtung der Permeabilität der Elektrostahlbleche im Wesentlichen parallel zur Walzrichtung des jeweiligen Stahlblechs ist.

4. Magnetkern nach einem der Ansprüche 1 bis 3, **dadurch gekennzeichnet, dass** die einzelnen Stahlbleche eine Dicke im Bereich von 500 $\mu$m bis 230 $\mu$m aufweisen.

5. Magnetkern nach einem der Ansprüche 1 bis 4, **dadurch gekennzeichnet, dass** die einzelnen Stahlbleche eine magnetische Flussdichte $B_{800A/m}$ aufweisen, die höher als 1,85 Tesla ist, wenn sie einer Magnetfeldstärke H von 800 Ampere pro Meter ausgesetzt sind.

6. Verwendung eines Magnetkerns nach einem der Ansprüche 1 bis 5 als Stator und/oder Rotor einer rotierenden Elektromaschine.

7. Verwendung eines Magnetkerns nach Anspruch 6, **dadurch gekennzeichnet, dass** der Winkel zwischen zwei aufeinanderfolgenden Verzahnungen des Stators ein ganzzahliger Teiler des Verschiebungswinkels ist.

**Revendications**

1. Noyau magnétique comprenant un empilement de tôles magnétiques en acier avec une direction préférentielle connue de perméabilité, où dans l'empilement, la direction préférentielle de la perméabilité des différentes tôles seules et/ou groupes de tôles diffère d'un angle de déplacement prédéterminé, où l'empilement des feuilles magnétiques en acier du noyau magnétique est constitué de tôles magnétiques en acier à grains orientés, **caractérisé en ce que** l'angle de déplacement se situe dans l'intervalle allant de 50° à 70°.

2. Noyau magnétique selon la revendication 1, **caractérisé en ce que** l'angle de déplacement est le même pour chaque paire des tôles seules successives ou groupes successifs de tôles.

3. Noyau magnétique selon l'une quelconque des revendications 1 ou 2, **caractérisé en ce que** la direction préférentielle de perméabilité des tôles magnétiques en acier est essentiellement parallèle à la direction de laminage de chaque tôle en acier.

4. Noyau magnétique selon l'une quelconque des revendications 1 à 3, **caractérisé en ce que** les tôles en acier individuelles ont une épaisseur située dans l'intervalle allant de 500 $\mu$m à 230 $\mu$m.

5. Noyau magnétique selon l'une quelconque des revendications 1 à 4, **caractérisé en ce que** les tôles seules ont une densité de flux magnétique $B_{800A/M}$ supérieure à 1,85 Tesla lorsqu'elles sont exposées à une puissance de champ magnétique H de 800 Ampère par mètre.

6. Utilisation d'un noyau magnétique selon l'une quelconque des revendications 1 à 5, comme stator et/ou rotor d'une machine électrique rotative.

7. Utilisation d'un noyau magnétique selon la revendication 6, **caractérisé en ce que** l'angle entre deux dents successives du stator est un diviseur entier de l'angle de déplacement.

Fig. 1

Fig. 2

Fig. 3

EP 2 193 591 B1

sectors

stator

rotor

◄─────► Rolling Direction

┅┅┅►┅ Flux path

Fig. 4

Fig. 5

EP 2 193 591 B1

Rolling Direction

$z_1$

d

$z_2$

$z_3$

$z_1$

$z_2$

$z_3$

Tube of flux

Winding turn

Fig. 6

EP 2 193 591 B1

Sheet

Rolling direction (RD)

90°

55°

0°

Epstein

Fig. 7

Fig. 8

Fig. 9

$\mu_r$max

angle α (degrees)

Fig. 10

Fig. 11

EP 2 193 591 B1

Rolling Direction

sheet [h,3]

sheet [h,2]

sheet [h,1]

Fig. 12

Fig. 13

EP 2 193 591 B1

Fig. 14

Fig. 15

Fig. 16

Fig. 18

Fig. 20

Fig. 17

Fig. 19

Figure 21 : $\bar{I}_\mu$ for the 2 **GO** assemblies

**EP 2 193 591 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 08223831 A

- EP 1503486 A1